# EUROPEAN PATENT APPLICATION

(11) **EP 2 626 379 A1**
(43) Date of publication of application: **14.08.2013**
(21) Application number: 12001171.3
(22) Date of filing: 22.02.2012
(51) Int. Cl.: C08J 7/06, C08K 3/00, C08K 5/159

(54) **Film with absorbing coating**

(30) Priority: 13.02.2012 US 201213371726
(71) Applicant: Morgan Adhesives Company, Stow, OH 44224-1898 (US)
(72) Inventor: Dupuis, Olivier, Jacques, 1435 Hevillers (BE); Lefevre, Carine, Gabriele, 1083 Ganshoren (BE); Minor, Jean-Christophe, F., 7830 Bassilly (BE)
(74) Representative: Von Rohr

(57) **Abstract**

A multilayer film may include a polymeric film layer and an absorbing layer on a side of the polymeric film layer. The absorbing layer may be adapted to absorb an odor, a volatile organic compound, or both. The absorbing layer may include a palladium complex and at least one of a cyclodextrin, a hydrophobin protein, and a derivative thereof.

## Description

### TECHNICAL FIELD

This disclosure relates to odor volatile organic compounds (VOC)-absorbing materials, related apparatuses, systems, and methods.

### BACKGROUND

An odor is typically caused by one or more volatile chemical compounds. On an average we spend 80% of our time indoors, where we are exposed continually to chemicals specific to interior air. These chemicals can be bad odors (toilets, garbage cans, body odors, etc.) as well as chemicals that either in the short term or the long term have been reported to produce health risks. In fact, furniture, construction materials, paints, and wall coverings may be sources of volatile organic compounds (VOC) known today for risks to human health (e.g., formaldehyde, benzene, phthalates, etc.).

In many cases, odors are due to the smell of bacteria growing on a surface. The bacteria multiply rapidly in the presence of nutrients (e.g., waste, food scraps, and body waste). As an example, a common but most irritating form of body odor is armpit odor. The stale perspiration under the arms is strongly linked with the armpit odor. Initially the perspiration may not smell, but after some time when the perspiration is exposed to the atmosphere, the active bacteria rapidly multiply. The bacterial breakdown of proteins into acids during this process generates the odor.

The quality of interior air is at the heart of legislative considerations and numerous Ecolabels have appeared in Europe over the last several years. Harmonization of tests and logos are part of current considerations.

Most of the solutions currently available on the market proposed either solutions that cover up the odors or air purification systems. Solutions that cover up odors are themselves emitters of VOC and, in addition, their effect is limited in time. An air purifier is an apparatus that functions to eliminate domestic and industrial pollution by filtering the air and eliminating bad odors. These solutions require aspirating the bad air to treat it, and an electrical supply is therefore required.

Wall coverings, that do not consume energy and which are capable of eliminating domestic pollution are rare. Recently, wall coverings that use the principle of photocatalysis have been commercialized. Catalyzing materials used are large forbidden band or gap semiconductors, often oxides or sulfurs (e.g., TiO₂, ZnO, CeO₂, ZrO₂, SnO₂, CdS, ZnS, etc.). Hence, the energy potential of the photogenerated charge carriers in the conduction band and valence bands corresponds with the electrochemical potentials of redox pairs (e.g., O₂, H₂O, OH and organic compounds) and can react thermodynamically by redox reactions resulting in their complete degradation. Titanium dioxide has shown good performance, in particular nanoparticles (10 - 13 nm) in crystallographic anatase form. Because of this, the mineralization of numerous organic compounds in liquid or fluid phase is therefore possible. The photo catalysis can be used in water treatment, air treatment, and deodorization, but also as an antibacterial agent. The photo catalysis is already used in the treatment of air, its purification and it's deodorization. For example, photocatalytic paints are commercially available from Ripolin under the trade name Ripolin Photocatlytique, and WO/2009021524 describes a method and composition for producing optically clear catalytic coatings. With respect to such photcatalytic products, the activation of the catalyst is impossible without photons of high energy that is greater than the semiconductor gap (e.g., a wavelength corresponding to ultraviolet for titanium dioxide). For example, only about 4% of solar radiation may be useful for activating a titanium oxide material. To increase the spectral response of the catalyst, the semiconductor may be doped with transition metals, the surface may be sensitized, or the semiconductors may be stacked.

In addition, there is disagreement as to whether there is a risk of these nanoparticles (e.g., TiO₂) leaving the substrate (with wear to the materials) and penetrating living organisms. Some toxicologists consider that if significant photocatalytic activity exists, this implies that the nanoparticles of TiO₂ are still accessible to gases that circulate in the materials or to contact with microporous surfaces. Therefore, it may be this reactivity that renders these particles pathogenic for cells, perhaps within agglomerates that cannot be dense, stable, and solid. The question may also be asked of the toxicity of the degradation products (e.g., alcohol transformed into formaldehyde and NOx in nitrates that are already too common in our environment) with possible immediate or delayed impacts, in space and time, through the contamination of water, air, and the ground. Children may be particularly sensitive to the effects of titanium dioxide. It is for this reason that European authorities for food safety (EFSA) and the French agency for occupational health and safety (AFSSET) advise avoiding sunscreens made with titanium dioxide for young children.

### SUMMARY

The present embodiments provide odor and VOC-absorbing materials, related apparatuses, systems, and methods.

In one embodiment, a multilayer film includes a polymeric film layer and an absorbing layer on a side of the polymeric film layer. The absorbing layer is configured to absorb an odor or a volatile organic compound. The absorbing layer includes a palladium complex and at least one of a cyclodextrin, a hydrophobin protein, and a derivative thereof. The multilayer film may include an adhesive layer on a second side of the polymeric film layer opposite the first side.

In another embodiment, a process for making a multilayer film including a polymeric film layer, an adhesive layer, and an absorbing layer configured to absorb an odor or a volatile organic compound includes providing the polymeric film layer and applying to a first surface of the polymeric film layer an adhesive. The process includes applying to a second surface of the polymeric film layer an absorbing topcoat solution comprising a palladium complex and at least one of a cyclodextrin and a hydrophobin protein. The process includes drying the absorbing topcoat solution to form the absorbing layer.

In another embodiment, an absorbing topcoat adapted to be disposed on a substrate and configured to absorb an odor or a volatile organic compound includes a palladium complex and at least one of a cyclodextrin, a hydrophobin protein, and a derivative thereof.

In another embodiment, a process for making an absorbing topcoat configured to absorb an odor or a volatile organic compound includes combining a palladium salt and at least one of a carboxylic acid and a chloride to form a palladium complex solution. The process includes combining (a) at least one of a cyclodextrin and a hydrophobin protein, (b) the palladium complex solution, and (c) a coating liquid to form an absorbing topcoat solution. The process includes applying the absorbing topcoat solution to a substrate.

In another embodiment, an absorbing solution configured to absorb an odor or a volatile organic compound includes, in combination, (a) a palladium salt; (b) a complexing agent comprising at least one of a carboxylic acid and a chloride; and (c) at least one of a cyclodextrin, a hydrophobin protein, and a derivative thereof.

In another embodiment, an absorbing product configured to absorb an odor or a volatile organic compound includes a substrate including a surface. The absorbing product includes an absorbing topcoat disposed on the surface of the substrate. The absorbing topcoat includes a palladium complex and at least one of a cyclodextrin, a hydrophobin protein, and a derivative thereof.

In another embodiment, a method for purifying interior air includes applying to an interior surface of a habitable structure an absorbing topcoat configured to absorb an odor or a volatile organic compound. The absorbing topcoat includes a palladium complex and at least one of a cyclodextrin, a hydrophobin protein, and a derivative thereof. The absorbing topcoat purifies the interior air without energy consumption and without photocatalyzation.

Other systems, methods, features, and advantages of the invention will be, or will become, apparent to a person skilled in the art upon examination of the following figures and detailed description. It is intended that all such additional systems, methods, features, and advantages be within the scope of the invention, and be encompassed by the following claims.

According to a first aspect of the present invention, the present invention refers to a multilayer film as defined in claim 1; particular embodiments are the subject-matter of the respective dependent claims.
According to another aspect of the present invention, the present invention refers to a process for making a multilayer film as defined in claim 4; particular embodiments are the subject-matter of the respective dependent claim.
According to a further aspect of the present invention, the present invention refers to an absorbing topcoat as defined in claim 6; particular embodiments are the subject-matter of the respective dependent claim.
According to yet another aspect of the present invention, the present invention refers to a process for making an absorbing topcoat as defined in claim 8; particular embodiments are the subject-matter of the respective dependent claim.
Furthermore, according to an aspect of the present invention, the present invention refers to an absorbing solution as defined in claim 10; particular embodiments are the subject-matter of the respective dependent claim.
According to a next aspect of the present invention, the present invention refers to an absorbing product as defined in claim 12; particular embodiments are the subject-matter of the respective dependent claims.
Finally, according to another aspect of the claimed invention, the present invention refers to a method for purifying interior air as defined in claim 15.

It is clear for the skilled practitioner that specific embodiments explained in the context of one aspect of the invention only also refer to all other aspects of the present invention also without explicit mentioning in order to avoid unnecessary repetitions.

### BRIEF DESCRIPTIONS OF THE DRAWINGS

FIG. 1 illustrates one example of a multilayer film having a polymeric film layer and an absorbing layer.

FIG. 2 illustrates one example of a multilayer film having a polymeric film layer, an adhesive layer, and an absorbing layer.

FIG. 3 illustrates one example of an absorbing topcoat disposed on a substrate.

### DETAILED DESCRIPTION OF THE DRAWINGS AND THE PRESENTLY PREFERRED EMBODIMENTS

In one embodiment, a multilayer film includes a polymeric film layer and an absorbing layer on a side of the polymeric film layer. The absorbing layer is configured to absorb an odor or a volatile organic compound. The absorbing layer includes a palladium complex and at least one of a cyclodextrin, a hydrophobin protein, and a derivative thereof. Preferably, the palladium complex and the at least one of a cyclodextrin, a hydrophobin protein, and a derivative thereof are present in an amount effective to absorb the odor and/or volatile organic compound. More preferably, the palladium complex and the at least one of a cyclodextrin, a hydrophobin protein, and a derivative thereof are present in enhanced effective amounts to absorb the odor and/or volatile organic compound.

The multilayer film may include an adhesive layer on a second side of the polymeric film layer opposite the first side. The adhesive layer may include a pressure sensitive adhesive. The adhesive layer may include at least one of a cyclodextrin, a hydrophobin protein, and a derivative thereof. The absorbing layer may include an antibacterial agent. The absorbing layer may include a binder. The binder may include at least one of a cement, an alkyd, an acrylic, a vinyl-acrylic, a vinyl acetate/ethylene, a polyurethane, a polyester, a melamine resin, an epoxy, and an oil. The palladium complex may include a palladium carboxylate. The palladium carboxylate may be selected from the group consisting of palladium tartrate, palladium succinate, palladium mesoxalate, palladium gluconate, and a combination thereof. The absorbing layer may include between about 0.1 and about 0.75 percent by weight of the palladium complex. The absorbing layer may include between about 2 and about 7 percent by weight of the cyclodextrin. The absorbing layer may include between about 0.1 and about 0.5 percent by weight of the hydrophobin protein. The absorbing layer may include between about 0.1 and about 0.75 percent by weight of the palladium complex, between about 2 and about 7 percent by weight of the cyclodextrin, and between about 0.1 and about 0.5 percent by weight of the hydrophobin protein. The absorbing layer may include the cyclodextrin, and the cyclodextrin may include a methyl-beta cyclodextrin. The polymeric film layer may include at least one of polyethylene, polypropylene, polyvinyl chloride, and polyethylene terephthalate. The multilayer film may have a sufficient absorbing capability such that a section of the multilayer film having an absorbing layer with a surface area of between 280 and 320 cm² and placed in a chamber having a volume of 400 cm³ with 2 cc of an n-butanol saturated atmosphere injected into the chamber absorbs greater than about 80 percent of the n-butanol in 1 hour. Beneficially, enhanced effective amounts of a palladium complex and at least one of a cyclodextrin, a hydrophobin protein, and a derivative thereof may be present in the absorbing layer to cause a section of the multilayer film having an absorbing layer with a surface area of between 280 and 320 cm² to absorb greater than about 80 percent of the n-butanol in 1 hour when placed in a chamber having a volume of 400 cm³ with 2 cc of an n-butanol saturated atmosphere injected into the chamber.

In another embodiment, a process for making a multilayer film including a polymeric film layer, an adhesive layer, and an absorbing layer configured to absorb an odor or a volatile organic compound includes providing the polymeric film layer and applying to a first surface of the polymeric film layer an adhesive. The process includes applying to a second surface of the polymeric film layer an absorbing topcoat solution comprising a palladium complex and at least one of a cyclodextrin and a hydrophobin protein. The process includes drying the absorbing topcoat solution to form the absorbing layer. Preferably, the absorbing layer includes the palladium complex and the least one of a cyclodextrin, a hydrophobin protein, and a derivative thereof in an amount effective to absorb the odor and/or volatile organic compound. More preferably, the palladium complex and the least one of a cyclodextrin, a hydrophobin protein, and a derivative thereof are present in enhanced effective amounts to absorb the odor and/or volatile organic compound.

The process may include UV curing the absorbing topcoat solution to form the absorbing layer. The palladium complex may be formed by combining a palladium salt with a complexing agent. The palladium salt may be selected from the group consisting of palladium chloride, palladium sulfate, palladium nitrate, and a combination thereof. The complexing agent may include a carboxylic acid selected from the group consisting of tartaric acid, succinic acid, mesoxalic acid, gluconic acid, and a combination thereof. The absorbing topcoat solution may include between about 0.001 and about 0.045 percent by weight of a palladium salt. The absorbing topcoat solution may include between about 0.01 and about 0.5 percent by weight of a carboxylic acid. The absorbing topcoat solution may have combined therein between about 0.0025 and about 0.025 percent by weight of a palladium salt, between about 0.05 and about 0.2 percent by weight of a carboxylic acid, and between about 0.25 and about 0.75 percent by weight of the hydrophobin protein.

In another embodiment, an absorbing topcoat adapted to be disposed on a substrate and configured to absorb an odor or a volatile organic compound includes a palladium complex and at least one of a cyclodextrin, a hydrophobin protein, and a derivative thereof. Preferably, the absorbing topcoat includes the palladium complex and the at least one of a cyclodextrin, a hydrophobin protein, and a derivative thereof in an amount effective to absorb the odor and/or volatile organic compound. More preferably, the palladium complex and the least one of a cyclodextrin, a hydrophobin protein, and a derivative thereof are present in enhanced effective amounts to absorb the odor and/or volatile organic compound.

The absorbing topcoat may include an antibacterial agent. The absorbing topcoat may include a binder. The binder may include at least one of a cement, an alkyd, an acrylic, a vinyl-acrylic, a vinyl acetate/ethylene, a polyurethane, a polyester, a melamine resin, an epoxy, and an oil. The palladium complex may include a palladium carboxylate. The palladium carboxylate may be selected from the group consisting of palladium tartrate, palladium succinate, palladium mesoxalate, palladium gluconate, and a combination thereof. The absorbing topcoat may include between about 0.1 and about 0.75 percent by weight of the palladium complex. The absorbing topcoat may include between about 2 and about 7 percent by weight of the cyclodextrin. The absorbing topcoat may include between about 0.1 and about 0.5 percent by weight of the hydrophobin protein.

In another embodiment, a process for making an absorbing topcoat configured to absorb an odor or a volatile organic compound includes combining a palladium salt and at least one of a carboxylic acid and a chloride to form a palladium complex solution. The process includes combining (a) at least one of a cyclodextrin and a hydrophobin protein, (b) the palladium complex solution, and (c) a coating liquid to form an absorbing topcoat solution. The process includes applying the absorbing topcoat solution to a substrate. Preferably, the absorbing topcoat solution is applied in a manner such that the palladium complex and the at least one of a cyclodextrin and a hydrophobin protein are present in an amount effective to absorb the odor and/or volatile organic compound. More preferably, the palladium complex and the at least one of a cyclodextrin, a hydrophobin protein, and a derivative thereof are present in enhanced effective amounts to absorb the odor and/or volatile organic compound.

The palladium salt may be selected from the group consisting of palladium chloride, palladium sulfate, palladium nitrate, and a combination thereof. The carboxylic acid may be selected from the group consisting of tartaric acid, succinic acid, mesoxalic acid, gluconic acid, and a combination thereof. The absorbing topcoat solution may include between about 0.001 and about 0.045 percent by weight of the palladium salt. The absorbing topcoat solution may include between about 0.01 and about 0.5 percent by weight of the carboxylic acid. The process may include combining the palladium complex solution with an alkaline compound. The alkaline compound may be selected from the group consisting of potassium hydroxide, sodium hydroxide, and a combination thereof. The absorbing topcoat solution may include between about 0.1 and about 0.5 percent by weight of the hydrophobin protein. The coating liquid may include a polymer dispersion. The coating liquid may include at least one of a paint and a varnish.

In another embodiment, an absorbing solution adapted to absorb an odor or a volatile organic compound includes, in combination, (a) a palladium salt; (b) a complexing agent comprising at least one of a carboxylic acid and a chloride; and (c) at least one of a cyclodextrin, a hydrophobin protein, and a derivative thereof.

The palladium salt may be selected from the group consisting of palladium chloride, palladium sulfate, palladium nitrate, and a combination thereof. The complexing agent may include the carboxylic acid, and the carboxylic acid may be selected from the group consisting of tartaric acid, succinic acid, mesoxalic acid, gluconic acid, and a combination thereof. The absorbing solution may include between about 0.001 and about 0.045 percent by weight of the palladium salt. The absorbing solution may include between about 0.01 and about 0.5 percent by weight of the carboxylic acid.

In another embodiment, an absorbing product configured to absorb an odor or a volatile organic compound includes a substrate including a surface. The absorbing product includes an absorbing topcoat disposed on the surface of the substrate. The absorbing topcoat includes a palladium complex and at least one of a cyclodextrin, a hydrophobin protein, and a derivative thereof. Preferably, the absorbing topcoat includes the palladium complex and the at least one of a cyclodextrin, a hydrophobin protein, and a derivative thereof in an amount effective to absorb the odor and/or volatile organic compound. More preferably, the palladium complex and the at least one of a cyclodextrin, a hydrophobin protein, and a derivative thereof are present in enhanced effective amounts to absorb the odor and/or volatile organic compound.

The substrate may include a polymeric film layer. The absorbing topcoat may include an antibacterial agent. The absorbing topcoat may include a binder. The binder may include at least one of a cement, an alkyd, an acrylic, a vinyl-acrylic, a vinyl acetate/ethylene, a polyurethane, a polyester, a melamine resin, an epoxy, and an oil. The palladium complex may include a palladium carboxylate. The palladium carboxylate may be selected from the group consisting of palladium tartrate, palladium succinate, palladium mesoxalate, palladium gluconate, and a combination thereof. The absorbing topcoat may include between about 0.1 and about 0.75 percent by weight of the palladium complex. The absorbing topcoat may include between about 2 and about 7 percent by weight of the cyclodextrin. The absorbing topcoat may include between about 0.1 and about 0.5 percent by weight of the hydrophobin protein. The absorbing product may have a sufficient absorbing capability such that a section of the absorbing product having an absorbing topcoat with a surface area of between 280 and 320 cm² and placed in a chamber having a volume of 400 cm³ with 2 cc of an n-butanol saturated atmosphere injected into the chamber absorbs greater than about 80 percent of the n-butanol in 1 hour.

In another embodiment, a method for purifying interior air includes applying to an interior surface of a habitable structure an absorbing topcoat configured to absorb an odor or a volatile organic compound. The absorbing topcoat includes a palladium complex and at least one of a cyclodextrin, a hydrophobin protein, and a derivative thereof. The absorbing topcoat purifies the interior air without energy consumption and without photocatalyzation. Preferably, the absorbing topcoat includes the palladium complex and the at least one of a cyclodextrin, a hydrophobin protein, and a derivative thereof in an amount effective to absorb the odor and/or volatile organic compound. More preferably, the palladium complex and the at least one of a cyclodextrin, a hydrophobin protein, and a derivative thereof are present in enhanced effective amounts to absorb the odor and/or volatile organic compound.

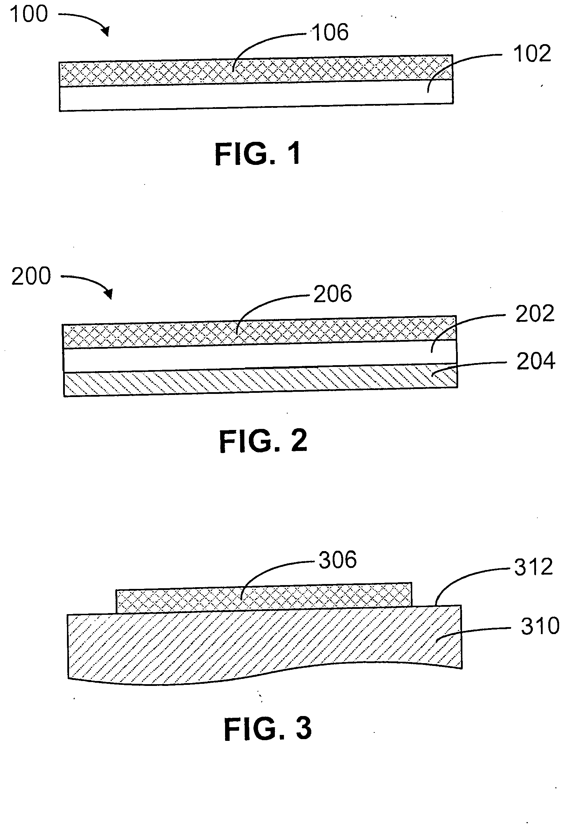

Now, referring to the drawings, **FIG. 1** illustrates one embodiment of a multilayer film 100. The film 100 may be configured as a laminated film that may absorb odors and/or volatile organic compounds (VOC). The film 100 may be applied to any surfaces (e.g., rough, painted, or wallpapered walls). In one example, the film 100 may not give off any masking product. In other examples, the film 100 may give off a masking product (e.g., a perfume). Additionally, or alternatively, when cleaned with an aqueous solution, the effect of the film 100 may remain substantially permanent over time. In other words, the film 100 may remain effective to absorb odors and/or VOC for days, months, or even years. In one example, the film 100 may remain effective for 5 years or more. The film 100 may not contain nanoparticles. For example, the film 100 may not contain titanium dioxide.

The film 100 may include a polymeric film layer 102 and an odor and VOC-absorbing layer 106. Unless otherwise specified, the term "odor and VOC-absorbing" may be used herein to refer to a component configured to absorb an odor, a VOC, or an odor and a VOC. The polymeric film layer 102 may be a single-layer or a multilayer (e.g., laminated) polymeric film having any suitable configuration. The polymeric film layer 102 may include, for example, a polyvinyl chloride (PVC) film, a polypropylene (PP) film, a polyethylene (PE) film, or any other polymeric film. In one example, the polymeric film layer 102 may include an antibacterial material such as, for example, an antibacterial film commercially available from Mondoplastico (Busto Arsizio, Italy). The odor and VOC-absorbing layer 106 may be a coating or topcoat, which may include any liquid, liquefiable, or mastic composition, which, after application to a substrate in a thin layer, may be converted to a solid film. The odor and VOC-absorbing layer 106 may include a binder, a solvent, pigments and/or one or more additives.

The binder, or the vehicle, may function as a film-forming component of the odor and VOC-absorbing layer 106. To that end, the binder may impart adhesion and/or bind together various other components of the odor and VOC-absorbing layer 106. The binder may influence such properties as gloss potential, exterior durability, flexibility, and toughness. The binder may include any suitable synthetic or natural resin such as, for example, a cement, an alkyd, an acrylic, a vinyl-acrylic, a vinyl acetate/ethylene (VAE), a polyurethane, a polyester, a melamine resin, an epoxy, an oil, or any other binder. The binder may be dried, or cured, using any suitable mechanism such as, for example, solvent evaporation, oxidative crosslinking, catalyzed/crosslinking polymerization, UV crosslinking polymerization, electron-beam crosslinking polymerization, or coalescence.

The solvent may be selected to adjust the curing properties and/or viscosity of a liquid coating, which may be a precursor of the odor and VOC-absorbing layer 106. The solvent may be volatile such that the solvent does not become part of the final film. In other words, the finished odor and VOC-absorbing layer 106 may be substantially free of the solvent. The solvent may affect the flow, application properties, and/or stability of the coating while in liquid state. Additionally, or alternatively, the solvent may function as the carrier for the nonvolatile components of the odor and VOC-absorbing layer 106. Upon evaporation or disintegration of the solvent, the remaining coating (i.e., the odor and VOC-absorbing layer 106) may be fixed to a surface such as, for example, a polymeric film or a surface to be treated. In one example, the solvent may include water.

One or more additives may be included in the odor and VOC-absorbing layer 106. The additive may be added in relatively small amounts and yet may have a substantial effect on the properties of the odor and VOC-absorbing layer 106. The additive may be included to, for example, modify surface tension, improve flow properties, improve the finished appearance, increase wet edge, improve pigment stability, impart antifreeze properties, control foaming, control skinning, or any other purpose. The additive may include, for example, a catalyst, a thickener, a stabilizer, an emulsifier, a texturizer, an adhesion promoter, a UV stabilizer, a flattener (e.g., a de-glossing agent), or any other additive.

In one embodiment, the odor and VOC-absorbing layer 106 may include a cyclodextrin, which may be capable of absorbing odors and/or VOC. The cyclodextrin may include a molecule conventionally used to absorb odors and/or VOC. For example, a cyclodextrin may be a cage like molecule of natural origin that is capable of encapsulating diverse molecules. For the purpose of this disclosure, the terms cyclodextrin and cycloamylose may be used interchangeably. The cyclodextrin may be any suitable cyclodextrin including, for example, α, β, or y derivatives. The cyclodextrin may include a truncated cone structure, producing a cavity in the center of the structure. This cavity may present an apolar environment that is rather hydrophobic (e.g., including skeletal carbons and ethereal oxygens) and capable of accepting molecules are that are only slightly hydro-soluble. The exterior of the structure may include numerous hydroxyl groups, leading to good solubility of the cyclodextrin in an aqueous medium. The solubility of the cyclodextrin may be variable depending on the derivative. The cyclodextrin may be capable of forming inclusion complexes with various hydrophobic host molecules. For example, one or more host molecules can be encapsulated in (e.g., in the apolar cavity of) one or more cyclodextrins. The cyclodextrin may be used as an agent that masks odors. For example, complexing may render odorous molecules less volatile. The cyclodextrin may be any of those commercially available from Wacker Chemie AG (München, Germany) under the trade names CAVAMAX® or CAVASOL®. For example, the cyclodextrin may be a methyl-beta cyclodextrin such as CAVASOL® W7 M. Inclusion of the cyclodextrin in the odor and VOC-absorbing layer 106 may improve the kinetics of the absorption of odors and/or VOC. For example, one embodiment of the film including the odor and VOC-absorbing layer 106 with cyclodextrins therein, may be capable of reducing odors and/or VOC in an enclosed test environment by about 80% in about 8 to about 12 hours.

In another embodiment, the odor and VOC-absorbing layer 106 may include a hydrophobin protein instead of or in addition to the cyclodextrin. The hydrophobin protein may be a small, cysteine rich protein (e.g., including about 100 amino acids) that is expressed by filamentous fungi. The hydrophobin protein may be capable of forming a hydrophobic coating on a surface of an object. Additionally, or alternatively, the hydrophobin protein may be capable of absorbing odors and/or VOC. The hydrophobin protein may be any of those commercially available from BASF (Ludwigshafen, Germany) under the trade name H STAR PROTEIN® (e.g., H STAR PROTEIN® B).

In another embodiment, the odor and VOC-absorbing layer 106 may include a palladium complex. The palladium complex may include a palladium carboxylate, which may be formed by combining a palladium salt and a carboxylic acid as further described below. The palladium complex may aid in catalyzing the absorption of odors and/or VOC by the odor and VOC-absorbing layer 106. For example, the palladium of the palladium complex may function as a catalyzer in the absorption of odors and/or VOC. In other words, the incorporation of palladium into different formulations of topcoats may increase the kinetics of the absorption of odors and/or VOC. For example, a topcoat that, without palladium, absorbs 80% of the odors and/or VOC in 24 hours may absorb 80% of the odors and/or VOC in less than one hour when the topcoat includes palladium. In another embodiment, the film including the palladium complex, may be capable of reducing odors and/or VOC in an enclosed test environment by about 100% in less than about 1 hour.

In one embodiment, a process for making the multilayer film 100 may include providing the polymeric film layer 102, applying to a surface of the polymeric film layer an odor and VOC-absorbing topcoat solution including the palladium complex and the cyclodextrin and/or the hydrophobin protein, and drying the odor and VOC-absorbing topcoat solution to form the odor and VOC-absorbing layer 106. The film 100 may be applied to a surface to be treated. In one example, the film 100 may be used to purify the air inside a room by the application of the film to a surface such as, for example, a wall, a ceiling, an object, or any other surface to be treated.

In any of the embodiments described herein, the cyclodextrin and/or the hydrophobin protein may be present as a derivative (e.g., a reaction product or a decomposition product) of the respective cyclodextrin or hydrophobin protein. Interaction may occur between any components described herein (e.g., the cyclodextrin, the hydrophobin protein, and/or the palladium complex), as evidenced by the increased kinetics of the absorption of odors and/or VOC. Moreover, it may be desirable to use a cyclodextrin having another component in the cavity thereof because an empty cyclodextrin may have a tendency to encapsulate some hydrophobic molecules present in a liquid formulation.

**FIG. 2** illustrates another embodiment of a multilayer film 200. The film 200 may be configured as a self-adhesive laminated film that may absorb odors and/or VOC. To that end, the film 200 may include a polymeric film layer 202, an adhesive layer 204, and an odor and VOC-absorbing layer 206. The polymeric film layer 202 may be configured generally as described above with reference to the polymeric film layer 102. The odor and VOC-absorbing layer 206 may be configured generally as described above with reference to the odor and VOC-absorbing layer 106. The adhesive layer 204 may include, for example, a pressure sensitive adhesive. The pressure sensitive adhesive may be any type of adhesive capable of forming a bond upon application of pressure to adhere the adhesive with an adherend. The adhesive layer 204 may be disposed on a first side (e.g., an inner surface) of the polymeric film layer 202, and the odor and VOC-absorbing layer 206 may be disposed on a second side (e.g., an outer surface) of the polymeric film layer opposite the first side.

In one embodiment, the adhesive layer 204 may include a cyclodextrin. The cyclodextrin of the adhesive layer 204 may be the same as or different than the cyclodextrin of the odor and VOC-absorbing layer 206. The internal surface of the film 200 (e.g., the surface of the film adjacent to the surface to be treated) may be coated with a layer of the adhesive to form the adhesive layer 204 as shown in **FIG. 2****.** The polymeric film layer 202 may be porous to enable the cyclodextrin, which may be present in the adhesive layer 204, to contact the air inside a room. In one example, the air inside the room may have a relative humidity of at least about 25% to aid the cyclodextrin in complexing with the odors and/or VOC in the air. In this manner, the film 200 may be used as an antimicrobial filter to kill bacteria and avoid odors which may result from bacteria multiplication. In one embodiment, the film 200 including cyclodextrin in the adhesive layer and a separate odor and VOC-absorbing layer may be capable of reducing odors and/or VOC in an enclosed test environment by about 100% in less than about 1 hour. As a comparative example, a film with cyclodextrin in the adhesive layer and without a separate odor and VOC-absorbing layer may be capable of reducing odors and/or VOC in an enclosed test environment by about 80% in about 24 hours. In another embodiment, the film including the palladium complex, may be capable of reducing odors and/or VOC in an enclosed test environment by about 100% in less than about 1 hour. In another embodiment, the adhesive layer 204 may include a hydrophobin protein instead of or in addition to the cyclodextrin.

In a preferred embodiment, a topcoat solution may be prepared in the following manner. Unless otherwise specified, the percentages described herein are weight percentages, and the amounts given in parts are parts by weight. The palladium may be incorporated into an aqueous solution using any suitable method for inclusion in the odor and VOC-absorbing layer. U.S. Patent No. 5,685,898 to Dupuis et al.*,* which is incorporated by reference herein in its entirety, describes one example of such an aqueous solution including palladium. A palladium salt (e.g., palladium chloride, palladium sulfate, palladium nitrate, or a combination thereof) may be combined with a carboxylic acid (e.g., tartaric acid, succinic acid, mesoxalic acid, gluconic acid, or a combination thereof) in water to form a palladium complex solution. The palladium complex solution may include a palladium carboxylate (e.g., palladium tartrate, palladium succinate, palladium mesoxalate, palladium gluconate, or a combination thereof). In one example, the palladium salt may be palladium chloride, the carboxylic acid may be tartaric acid, and the palladium carboxylate may be palladium tartrate. Between about 1 and about 10 g/L, preferably between about 1 and about 5 g/L, typically about 2.5 g/L of the palladium salt may be combined with between about 2 and about 50 g/L, preferably between about 2 and about 35 g/L, typically about 10.7 g/L of the carboxylic acid. After about 12 hours of mixing (e.g., by mechanical agitation), the palladium complex solution may be formed. In one example, the palladium complex solution may be a dark brown, clear solution.

An alkaline compound (e.g., potassium hydroxide, sodium hydroxide, or a combination thereof) may be combined with the palladium complex solution to adjust the pH of the palladium complex solution. For example, between about 5 and about 50 g/L, preferably between about 10 and about 30 g/L, typically about 10 g/L of the alkaline compound may be combined with the palladium complex solution to obtain a palladium complex solution with a pH between about 8 and about 10. This may aid in stabilizing a coating liquid such as, for example, a polymeric emulsion as further described below. In other words, adjusting the pH of the palladium complex solution may aid in incorporating the palladium complex solution into a polymeric emulsion, which may be stable at a pH between about 8 and about 10. In one example, the alkaline compound may be a strong base such as potassium hydroxide or sodium hydroxide.

The palladium complex solution may be combined with a coating liquid to form a palladium-containing coating liquid. For example, between about 0 and about 15%, preferably between about 5 and about 10% of the palladium complex solution may be added to the coating liquid. The coating liquid may be any type of coating liquid including, for example, a paint, a varnish, a polymer dispersion, an adhesive, or a protective varnish. The coating liquid may include a mono- or a bi-component and/or may be thermally reticulable with or without radiation. In one example, the coating liquid may be aqueous or able to contain a determined percentage of water.

A protein (e.g., the hydrophobin protein) may be combined with (e.g., added to) the palladium-containing coating liquid to form an odor and VOC-absorbing coating liquid. In one example, the protein is a 5% water solution of H STAR PROTEIN® B liquid. Between about 1 and about 20%, preferably between about 5 and about 15%, typically about 6.7% of the protein may be combined with the palladium-containing coating liquid.

Additionally, or alternatively, the cyclodextrin may be combined with (e.g., added to) the palladium-containing coating liquid to form the odor and VOC-absorbing coating liquid. In one example, the cyclodextrin is a water based solution of CAVASOL® W7 M. The water-based solution may include between about 60 and about 80 g of CAVASOL® W7 M dissolved in between about 80 and about 100 g of deionized (DI) water. Between about 1 and about 10%, preferably between about 1 and about 6%, typically about 4% of the cyclodextrin solution may be combined with the palladium-containing coating liquid.

The final concentration of the palladium complex in the odor and VOC-absorbing coating liquid may be between about 0.01 and about 1.0%, preferably between about 0.025 and about 0.75%, typically about 0.45%. The final concentration of the palladium salt in the odor and VOC-absorbing coating liquid may be between about 0.001 and about 0.045%, preferably between about 0.0025 and about 0.025%. The final concentration of the carboxylic acid in the odor and VOC-absorbing coating liquid may be between about 0.01 and about 0.5%, preferably between about 0.05 and about 0.2%. The final concentration of the strong base in the odor and VOC-absorbing coating liquid may be between about 0.005 and about 0.5%, preferably between about 0.01 and about 0.1 %. The final concentration of the protein in the odor and VOC-absorbing coating liquid may be between about 0.05 and about 1%, preferably between about 0.25 and about 0.75%, typically about 0.33%. The final concentration of the cyclodextrin in the odor and VOC-absorbing coating liquid may be between about 0.5 and about 10%, preferably between about 2 and about 7%, typically about 3.5%.

The odor and VOC-absorbing coating liquid may be applied to a substrate by any suitable method (e.g., rolling, spraying, or painting). The odor and VOC-absorbing coating liquid may be dried and/or crosslinked to form the odor and VOC-absorbing layer as described above. The final concentration of the palladium complex in the odor and VOC-absorbing layer may be between about 0.1 and about 0.75%. The final concentration of the palladium salt in the odor and VOC-absorbing layer may be between about 0.001 and about 0.0025%. The final concentration of the carboxylic acid in the odor and VOC-absorbing layer may be between about 0.004 and about 0.01 %. The final concentration of the protein in the odor and VOC-absorbing layer may be between about 0.1 and about 0.5%. The final concentration of the cyclodextrin in the odor and VOC-absorbing layer may be between about 2 and about 7%.

In one example, the odor and VOC-absorbing layer may include an antibacterial or antimicrobial agent. Because the antimicrobial agent may be effective for absorbing odors, the antimicrobial agent may be omitted where only VOC absorption is desired. Preferably, the antimicrobial agent may not include a biocide, which may be capable of provoking an adverse effect on humans, animals, or the environment. To that end, the antimicrobial agent may include, for example, ionic silver. Such ionic silver may be generally inoffensive for humans, animals or the environment. In one example, the antimicrobial agent may be incorporated into a carrier. For example, the antimicrobial agent may be configured as a clay that is functionalized with silver. In other words, the antimicrobial agent may be configured as a modified natural laminar phyllosilicate including a silver based antimicrobial agent. Exemplary antimicrobial clays may include any of those commercially available from Nanobiomatters (Valencia, Spain) under the trade name BACTIBLOCK® antimicrobial additive (e.g., BACTIBLOCK® G101 R1.47/AQ). In one example, the antimicrobial agent is a 30% aqueous dispersion of BACTIBLOCK®. Between about 0.1 and about 15%, preferably between about 1 and about 10%, typically about 6% of the antimicrobial agent solution may be combined with the coating liquid.

The antimicrobial agent may be provided in the form of a powder, which may be dispersed in the coating liquid, in the form of an aqueous solution, or in any other form. An antimicrobial agent in the form of an aqueous solution may include any amount (e.g., about 33%) of active substance. In one example, 30 parts of BACTIBLOCK® G101 R1.47/AQ may be mixed in 69 parts of water and 1 part 5% liquid H STAR PROTEIN®. Between about 0.1 and about 30%, preferably between about 5 and about 20% of the combined antimicrobial agent and hydrophobin protein solution may be added to the liquid coating. The final concentration of the antimicrobial agent in the liquid coating may be between about 0.001 and about 3%, preferably between about 0.5 and about 2%.

In any of the examples described herein, the various components of a composition (e.g., the liquid coating, the palladium complex solution, the palladium-containing coating liquid, the odor and VOC-absorbing coating liquid, or any other composition) may be combined in any order to form the respective composition without departing from the scope of this disclosure. For example, the hydrophobin protein and/or the cyclodextrin may be combined with the coating liquid before, after, or at substantially the same time as the palladium complex solution is combined with the coating liquid.

An odor and VOC-absorbing coating liquid as described herein may be capable of absorbing odors and/or VOC. In this manner, the odor and VOC-absorbing coating liquid may be configured to purify the air. The odor and VOC-absorbing coating liquid may be applied directly to an interior surface of a building or a polymer film, with or without an adhesive, which can be applied to an interior surface of a building. Preferably, one or more layers of coating of more than about 5 µm (in a dry state) may be applied to the interior surface or the polymer film.

In one embodiment, an odor and VOC-absorbing solution may include the combined palladium complex solution, alkaline compound, hydrophobin protein, and/or cyclodextrin. In another embodiment, an odor and VOC-absorbing topcoat solution may include such an odor and VOC-absorbing solution combined with a coating liquid as described above. In other words, the odor and VOC-absorbing coating liquid described above may be configured as an odor and VOC-absorbing topcoat solution. Such an odor and VOC-absorbing topcoat solution may be configured for application to a substrate such as, for example, a polymeric film or a surface to be treated.

The odor and VOC-absorbing topcoat solution may be dried and/or cured to form an odor and VOC-absorbing topcoat. **FIG. 3** shows one embodiment of an odor and VOC-absorbing topcoat 306. The odor and VOC-absorbing topcoat 306 may be disposed on a substrate 310. The substrate 310 may be any type of substrate including, for example, a polymeric film, an interior surface (e.g., a wall, a floor, a ceiling, a door, a window, a cabinet, or a countertop), or any surface to be treated. The odor and VOC-absorbing topcoat 306 may be disposed on a surface 312 of the substrate. The odor and VOC-absorbing topcoat 306 disposed on the substrate 310 may collectively form an odor and VOC-absorbing product. The odor and VOC-absorbing topcoat 306 may cover at least a portion of the surface 312 of the substrate 310. In one example, the odor and VOC-absorbing topcoat 306 may cover substantially the entire surface 312.

In another embodiment, a method to purify interior air without energy consumption and without light (i.e., without photocatalyzation) may include applying to an interior surface of a habitable structure an odor and VOC-absorbing topcoat solution or an odor and VOC-absorbing article as described above. For example, the method may include applying a wall covering that absorbs odors and/or VOC. Preferably, the wall covering may not release VOC itself. To that end, the wall covering may include an aqueous base. In one example, the wall covering may not include an organic solvent.

The present invention is further elucidated by the following items (aspects):
Item 1: A multilayer film comprising:
   a polymeric film layer; and
   an absorbing layer on a side of the polymeric film layer, the absorbing layer comprising a palladium complex and at least one of a cyclodextrin, a hydrophobin protein, and a derivative thereof, in amounts effective to absorb an odor, a volatile organic compound, or both.
Item 2: The multilayer film of Item 1, further comprising an adhesive layer on a second side of the polymeric film layer opposite the first side.
Item 3: The multilayer film of Item 2, wherein the adhesive layer comprises a pressure sensitive adhesive.
Item 4: The multilayer film of Item 2, wherein the adhesive layer comprises at least one of a cyclodextrin, a hydrophobin protein, and a derivative thereof.
Item 5: The multilayer film of Item 1, wherein the absorbing layer further comprises an antibacterial agent.
Item 6: The multilayer film of Item 1, wherein the absorbing layer further comprises a binder.
Item 7: The multilayer film of Item 6, wherein the binder comprises at least one of a cement, an alkyd, an acrylic, a vinyl-acrylic, a vinyl acetate/ethylene, a polyurethane, a polyester, a melamine resin, an epoxy, and an oil.
Item 8: The multilayer film of Item 1, wherein the palladium complex comprises a palladium carboxylate.
Item 9: The multilayer film of Item 8, wherein the palladium carboxylate is selected from the group consisting of palladium tartrate, palladium succinate, palladium mesoxalate, palladium gluconate, and a combination thereof.
Item 10: The multilayer film of Item 1, wherein the absorbing layer comprises between about 0.1 and about 0.75 percent by weight of the palladium complex.
Item 11: The multilayer film of Item 1, wherein the absorbing layer comprises between about 2 and about 7 percent by weight of the cyclodextrin.
Item 12: The multilayer film of Item 1, wherein the absorbing layer comprises between about 0.1 and about 0.5 percent by weight of the hydrophobin protein.
Item 13: The multilayer film of Item 1, wherein the absorbing layer comprises between about 0.1 and about 0.75 percent by weight of the palladium complex, between about 2 and about 7 percent by weight of the cyclodextrin, and between about 0.1 and about 0.5 percent by weight of the hydrophobin protein.
Item 14: The multilayer film of Item 1, wherein the absorbing layer comprises the cyclodextrin, and the cyclodextrin comprises a methyl-beta cyclodextrin.
Item 15: The multilayer film of Item 1, wherein the polymeric film layer comprises at least one of polyethylene, polypropylene, polyvinyl chloride, and polyethylene terephthalate.
Item 16: The multilayer film of Item 1, wherein the multilayer film has a sufficient absorbing capability such that a section of the multilayer film having an absorbing layer with a surface area of between 280 and 320 cm² and placed in a chamber having a volume of 400 cm³ with 2 cc of an n-butanol saturated atmosphere injected into the chamber absorbs greater than about 80 percent of the n-butanol in 1 hour.
Item 17: A process for making a multilayer film comprising a polymeric film layer, an adhesive layer, and an absorbing layer capable of absorbing an odor, a volatile organic compound, or both, the process comprising:
   providing the polymeric film layer;
   applying to a first surface of the polymeric film layer an adhesive;
   applying to a second surface of the polymeric film layer an absorbing topcoat solution comprising a palladium complex and at least one of a cyclodextrin and a hydrophobin protein; and
   drying the absorbing topcoat solution to form the absorbing layer comprising the palladium complex and the at least one of a cyclodextrin and a hydrophobin protein in amounts effective to absorb an odor, a volatile organic compound, or both.
Item 18: The process of Item 17 further comprising UV curing the absorbing topcoat solution to form the absorbing layer.
Item 19: The process of Item 17 wherein the palladium complex is formed by combining a palladium salt with a complexing agent.
Item 20: The process of Item 19 wherein the palladium salt is selected from the group consisting of palladium chloride, palladium sulfate, palladium nitrate, and a combination thereof.
Item 21: The process of Item 19 wherein the complexing agent comprises a carboxylic acid selected from the group consisting of tartaric acid, succinic acid, mesoxalic acid, gluconic acid, and a combination thereof.
Item 22: An absorbing topcoat adapted to be disposed on a substrate, the absorbing topcoat capable of absorbing an odor, a volatile organic compound, or both and comprising:
   a palladium complex; and
   at least one of a cyclodextrin, a hydrophobin protein, and a derivative thereof in amounts effective to absorb an odor, a volatile organic compound, or both.
Item 23: The absorbing topcoat of Item 22, further comprising an antibacterial agent.
Item 24: The absorbing topcoat of Item 22, further comprising a binder.
Item 25: The absorbing topcoat of Item 24, wherein the binder comprises at least one of a cement, an alkyd, an acrylic, a vinyl-acrylic, a vinyl acetate/ethylene, a polyurethane, a polyester, a melamine resin, an epoxy, and an oil.
Item 26: The absorbing topcoat of Item 22, wherein the palladium complex comprises a palladium carboxylate.
Item 27: The absorbing topcoat of Item 26, wherein the palladium carboxylate is selected from the group consisting of palladium tartrate, palladium succinate, palladium mesoxalate, palladium gluconate, and a combination thereof.
Item 28: The absorbing topcoat of Item 22, wherein the absorbing topcoat comprises between about 0.1 and about 0.75 percent by weight of the palladium complex.
Item 29: The absorbing topcoat of Item 22, wherein the absorbing topcoat comprises between about 2 and about 7 percent by weight of the cyclodextrin.
Item 30: The absorbing topcoat of Item 22, wherein the absorbing topcoat comprises between about 0.1 and about 0.5 percent by weight of the hydrophobin protein.
Item 31: A process for making an absorbing topcoat adapted to absorb an odor, a volatile organic compound, or both, the process comprising:
   combining a palladium salt and at least one of a carboxylic acid and a chloride to form a palladium complex solution;
   combining (a) at least one of a cyclodextrin, a hydrophobin protein, and a derivative thereof, (b) the palladium complex solution, and (c) a coating liquid to form an absorbing topcoat solution; and
   applying the absorbing topcoat solution to a substrate.
Item 32: The process of Item 31, wherein the palladium salt is selected from the group consisting of palladium chloride, palladium sulfate, palladium nitrate, and a combination thereof.
Item 33: The process of Item 31, wherein the carboxylic acid is selected from the group consisting of tartaric acid, succinic acid, mesoxalic acid, gluconic acid, and a combination thereof.
Item 34: The process of Item 31, further comprising combining the palladium complex solution with an alkaline compound.
Item 35: The process of Item 34, wherein the alkaline compound is selected from the group consisting of potassium hydroxide, sodium hydroxide, and a combination thereof.
Item 36: The process of Item 31, wherein the coating liquid comprises a polymer dispersion.
Item 37: The process of Item 31, wherein the coating liquid comprises at least one of a paint and a varnish.
Item 38: An absorbing solution adapted to absorb an odor, a volatile organic compound, or both, the absorbing solution comprising, in combination:
   a palladium salt;
   a complexing agent comprising at least one of a carboxylic acid and a chloride; and
   at least one of a cyclodextrin, a hydrophobin protein, and a derivative thereof.
Item 39: The absorbing solution of Item 38, wherein the palladium salt is selected from the group consisting of palladium chloride, palladium sulfate, palladium nitrate, and a combination thereof.
Item 40: The absorbing solution of Item 38, wherein the complexing agent comprises the carboxylic acid, and the carboxylic acid is selected from the group consisting of tartaric acid, succinic acid, mesoxalic acid, gluconic acid, and a combination thereof.
Item 41: The absorbing solution of Item 38, wherein the absorbing solution comprises between about 0.001 and about 0.045 percent by weight of the palladium salt.
Item 42: The absorbing solution of Item 38, wherein the absorbing solution comprises between about 0.01 and about 0.5 percent by weight of the carboxylic acid.
Item 43: An absorbing product configured to absorb an odor, a volatile organic compound, or both, the absorbing product comprising:
   a substrate comprising a surface; and
   an absorbing topcoat disposed on the surface of the substrate, the absorbing topcoat comprising a palladium complex and at least one of a cyclodextrin, a hydrophobin protein, and a derivative thereof in amounts effective to absorb an odor, a volatile organic compound, or both.
Item 44: The absorbing product of Item 43, wherein the substrate comprises a polymeric film layer.
Item 45: The absorbing product of Item 43, wherein the absorbing topcoat further comprises an antibacterial agent.
Item 46: The absorbing product of Item 43, wherein the absorbing topcoat further comprises a binder.
Item 47: The absorbing product of Item 46, wherein the binder comprises at least one of a cement, an alkyd, an acrylic, a vinyl-acrylic, a vinyl acetate/ethylene, a polyurethane, a polyester, a melamine resin, an epoxy, and an oil.
Item 48: The absorbing product of Item 43, wherein the palladium complex comprises a palladium carboxylate.
Item 49: The absorbing product of Item 48, wherein the palladium carboxylate is selected from the group consisting of palladium tartrate, palladium succinate, palladium mesoxalate, palladium gluconate, and a combination thereof.
Item 50: The absorbing product of Item 43, wherein the absorbing topcoat comprises between about 0.1 and about 0.75 percent by weight of the palladium complex.
Item 51: The absorbing product of Item 43, wherein the absorbing topcoat comprises between about 2 and about 7 percent by weight of the cyclodextrin.
Item 52: The absorbing product of Item 43, wherein the absorbing topcoat comprises between about 0.1 and about 0.5 percent by weight of the hydrophobin protein.
Item 53: The absorbing product of Item 43, wherein the absorbing product has a sufficient absorbing capability such that a section of the absorbing product having an absorbing topcoat with a surface area of between 280 and 320 cm² and placed in a chamber having a volume of 400 cm³ with 2 cc of an n-butanol saturated atmosphere injected into the chamber absorbs greater than about 80 percent of the n-butanol in 1 hour.
Item 54: A method for purifying interior air, the method comprising:
   applying to an interior surface of a habitable structure an absorbing topcoat adapted to absorb an odor, a volatile organic compound, or both, the absorbing topcoat comprising a palladium complex and at least one of a cyclodextrin, a hydrophobin protein, and a derivative thereof; and
   allowing the absorbing topcoat to be maintained in contact with the interior air for a period of time to absorb at least a portion of the odor or the volatile organic compound present in the interior air;
   wherein the absorbing topcoat purifies the interior air without energy consumption and without photocatalyzation.

### EXAMPLES

The following are examples and comparative examples. The amounts of the various components described in these examples are the amounts of the respective components in the coating liquid, or odor and VOC-absorbing solution. The coating liquid was subsequently dried or cured to form a topcoat.

An odor and VOC-absorbing solution (i.e., the formulation to be tested) was coated on a flexible substrate. Typically, the substrate was a polyvinyl chloride (PVC), polyethylene terephthalate (PET), polyethylene (PE) or polypropylene (PP). The odor and VOC-absorbing solution was dried and/or crosslinked to form an odor and VOC-absorbing topcoat on the substrate. Each of two analysis chambers having a volume of 400 cm³ was equipped with a calibrated photoionizaton detector (PID). One of the two analysis chambers was left empty or a sample of the uncoated substrate was introduced as a reference. A sample of the coated substrate having a surface area of between 280 and 320 cm² was introduced into the other analysis chamber. Testing was conducted at 23°C and 45% relative humidity. About 2 to about 5 mL of 99.9% n-butanol were introduced into a high-performance liquid chromatography (HPLC) vial to fill the vial with odors and/or VOC. The vial was immediately hermetically closed with a septum to form a saturated atmosphere of the n-butanol. Approximately 2 cc of the saturated atmosphere were withdrawn from the vial with a syringe and introduced into each of the analysis chambers through a septum. The absorption of n-butanol in each analysis chamber over time was measured with the PID.

A photoionization detector (PID) is an efficient detector for many gas and vapor analytes. In the following examples, the PID was a VOC-TRAQ® toxic gas detector, commercially available from Mocon (Minneapolis, Minnesota). Typically, a PID measures gases and/or vapor analytes in concentrations from ppb to 10,000 ppm. In a PID, high-energy photons, typically in the UV range, break molecules into positively charged ions. The gas becomes electrically charged, and the ions produce an electrical current, which is the signal output of the PID. The greater the concentration of a component, the more ions are produced, and the greater the current.

Cyclodextrin solution or CAVASOL® W7 M solution is an 80/100 mixture of cyclodextrin in water using Cavasol® W7 M methyl-ß-cyclodextrin having an average molecular weight of about 1310, a density of about 0.2-0.3 g/cm³ and a melting range of 160-190°C, which is commercially available from Wacker Chemical Corp. (Adrian, Michigan).

Palladium complex is a solution of palladium chloride (1 molar equivalent) and tartaric acid (4 molar equivalent) dissolved in deionized water with the pH adjusted to about 9 by the addition of potassium hydroxide.

JONCRYL® ECO 2124 is a glycol ether free acrylic emulsion for use in water-based inks for film substrates, which is commercially available from BASF (Ludwigshafen, Germany).

JONCRYL® Wax 35 is a hard, fine particle size polyethylene wax emulsion, commercially available from BASF (Ludwigshafen, Germany).

UCECOAT® 7699 is a solvent-free radiation curable polyurethane dispersion having a density of about 1.0 g/cm³, pH of 7-8.5, and a particle size of less than 150 nanometers, which is commercially available from Cytec Industries, Inc. (Woodland Park, New Jersey).

ADDITOL® BCPK is a radical photoinitiator blend of 1-hydroxy-cyclohexylphenyl-ketone and benzophenone which is activated under UV or electron beam radiation and is commercially available from Cytec Industries, Inc. (Woodland Park, New Jersey).

BYK®-028 is an anti-foaming agent, commercially available from BYK-Chemie (Wesel, Germany).

TEGO® Wet 500 is a foam inhibiting substrate wetting additive, which is commercially available from Evonik Industries AG (Essen, Germany).

H*B liquide or H STAR PROTEIN® B liquid is about a 5% (wt.) aqueous solution of a recombinantly produced hydrophobin protein from fugal analogues having a pH of about 7, a density of about 1 g/cm³, and a molecular weight of about 18800 g/mol, which is commercially available from BASF SE (Ludwigshafen, Germany).

BINDZIL® cc 30 is an abrasive resistance additive which includes a colloidal silica aqueous dispersion of about 29% (wt.) of silicone dioxide and silylated silicone dioxide in water and about 2.7% (wt.) ethanol. This material is commercially available from Akzo Nobel Chemicals GmbH (Duren, Germany).

HYDROCER EE95 is a scuff resistance and slip additive which includes an anionic, high-density polyethylene emulsion having a viscosity of 20-50 cps and a pH of 9-10 and is commercially available from Shamrock Technologies, Inc. (Newark, New Jersey).

TEGO® Rad 2200 N is a wetting, slip and flow additive which includes a radically crosslinkable silicone polyether acrylate and is commercially available from Evonik Industries AG (Essen, Germany).

EBECRYL® 350 is a UV or electron beam crosslinkable slip additive which includes a silicone diacrylate having a density of about 1.05 g/cm³ and is commercially available from Cytec Industries, Inc. (Woodland Park, New Jersey).

Aquamate 9026 is a matting agent composed of hydrocarbon wax dispersion which is commercially available from Shamrock Technologies, Inc. (Newark, New Jersey).

BACTIBLOCK® G101 R1.47/AQ and BACTIBLOCK® G101 S1.19/AQ are antimicrobial additives composed of an organomodified natural laminar phyllosilicate containing silver which are commercially available from NanoBioMatters BactiBlock S.L. (Valencia, Spain).
SPHERIGLASS® are glass spheres having an average diameter of 9-31 microns which are commercially available from Potters Industries LLC (Valley Forge, Pennsylvania).

RD-MONOGRAFF® is an acrylic / polyurethane dispersion having a density of about 1.05 g/cm³ and is commercially available from RD Coatings (Assesse, Belgium).

PROXEL® BZ Plus is a preservative, commercially available from Arch Chemicals (Atlanta, Georgia).

**Example 1:** Incorporation of an Odor and VOC-absorbing Solution into a Commercial Varnish

The components listed in Table 1 were combined to form an odor and VOC-absorbing varnish. The odor and VOC-absorbing varnish was applied to different surfaces according to prescribed methods of application, one of which also included self-adhesive complexes. After drying, the absorption capacities for odors and/or VOC were measured using a PID. As a reference, the varnish alone (i.e., the RD-MONOGRAFF® varnish without the additional components) was evaluated. The reference varnish did not absorb odors and/or VOC. The odor and VOC-absorbing varnishes absorbed between about 80 and about 100% of the odors and/or VOC in less than 1 hour.

**Table 1: General Experimental Composition**

| **Compound** | **% Weight** |
|---|---|
| RD-MONOGRAFF® | 77 to 99 |
| Palladium chloride | 0.0025 to 0.025 |
| Tartaric acid | 0.011 to 0.110 |
| Potassium Hydroxide | 0.01 to 0.1 |
| BACTIBLOCK® | 0.5 to 2.0 |
| H STAR PROTEIN® B liquid | 0.25 to 0.75 |
| Water | 0.1 to 20 |

Table 2 lists specific formulations that were tested and the experimental results. Each of the values listed in Table 2, with the exception of the bottom row, is given as parts, by weight, of the respective component in each formulation. The bottom row is given as a percentage of n-butanol absorbed in 1 hour.

**Table 2: Experimental Formulations**

| **Formula** | **2.1** | **2.2** |
|---|---|---|
| **Component** | **Parts** | |
| RD-MONOGRAFF® | 17.85 | 15.85 |
| BACTIBLOCK® | 0.15 | 0.15 |
| H STAR PROTEIN® B liquid | 1 | 3 |
| Palladium complex | 1 | 1 |
| | | |
| n-Butanol (Abs/1h00) | 80% | 100% |

**Example 2:** Incorporation of an Odor and VOC-absorbing Solution into an Acrylic Emulsion

The components listed in Table 3 were combined to form an odor and VOC-absorbing solution. The odor and VOC-absorbing solution was applied to different polymer films (e.g., PVC, PET, PP, and PE films), which also included self-adhesive complexes. The odor and VOC-absorbing solution was dried to form an odor and VOC-absorbing topcoat. After drying, the absorption capacities for odors and/or VOC were measured using a PID. As a reference, a coating without CAVASOL® W7 M solution, H STAR PROTEIN® B liquid, or palladium complex (e.g., active components) also was evaluated. The reference films did not absorb odors and/or VOC. The sample films including the odor and VOC-absorbing topcoat absorbed between about 80 and about 100% of the odors and/or VOC in less than 1 hour.

**Table 3: General Experimental Composition**

| **Compound** | **% Weight** |
|---|---|
| JONCRYL® ECO 2124 | 63 to 73 |
| DI water | 1 to 20 |
| BYK®-028 | 0.1 to 1.0 |
| JONCRYL® Wax 35 | 4 to 8 |
| isopropyl alcohol (IPA) | 1 to 8 |
| Palladium chloride | 0.0025 to 0.025 |
| Tartaric acid | 0.011 to 0.110 |
| Potassium hydroxide | 0.01 to 0.1 |
| BACTIBLOCK® | 0.5 to 2.0 |
| H STAR PROTEIN® B liquid | 0.25 to 0.75 |

Table 4 lists specific formulations that were tested and the experimental results. Each of the values listed in Table 4, with the exception of the bottom row, is given as parts, by weight, of the respective component in each formulation. The bottom row is given as a percentage of n-butanol absorbed in 1 hour.

**Table 4: Experimental Formulations**

| **Formulations** | **4.1** | **4.2** | **4.3** | **4.4** | **4.5** | **4.6** |
|---|---|---|---|---|---|---|
| JONCRYL® ECO 2124 | 14.62 | 14.62 | 15.5 | 15.5 | 14.62 | 14.62 |
| BYK®-028 | 0.2 | 0.2 | 0.2 | 0.2 | 0.2 | 0.2 |
| DI water | 1.61 | 1.61 | 1.61 | 1.61 | 1.61 | 1.61 |
| JONCRYL® Wax 35 | 1.61 | 1.61 | 1.61 | 1.61 | 1.61 | 1.61 |
| IPA | 1.61 | 1.61 | 1.61 | 1.61 | 1.61 | 1.61 |
| CAVASOL® W7 M solution | - | - | 0.88 | 0.88 | - | 0.88 |
| H STAR PROTEIN® B liquid | 1.85 | 1.85 | - | - | 1.85 | 1.85 |
| BACTIBLOCK® G101 R1.47/AQ | 0.33 | 0.082 | 0.33 | 0.082 | 0.33 | 0.33 |
| Palladium complex | - | - | - | - | 0.001 | 0.001 |
| | | | | | | |
| n-Butanol (Abs/1h00) | 60 | 61 | 59 | 56 | 72 | 100 |

**Example 3:** Incorporation of an Odor and VOC-absorbing Solution into a Dispersion of Polyurethane Reticulable by Radiation

The components listed in Table 5 were combined to form an odor and VOC-absorbing solution. The odor and VOC-absorbing solution was applied to different polymer films (e.g., PVC, PET, PP, and PE films), which also included self-adhesive complexes. The odor and VOC-absorbing solution was dried and cured to form an odor and VOC-absorbing topcoat. After drying and reticulation by radiation, the absorption capacities for odors and/or VOC were measured using a PID. As a reference, a coating without CAVASOL® W7 M solution, H STAR PROTEIN® B liquid, or palladium complex (e.g., active components) also was evaluated. The reference films did not absorb odors and/or VOC. The sample films including the odor and VOC-absorbing topcoat absorbed between about 80 and about 100% of the odors and/or VOC in less than 1 hour.

**Table 5: General Experimental Composition**

| **Compound** | **% Weight** |
|---|---|
| UCECOAT® 7699 | 65 to 80 |
| ADDITOL® BCPK | 0.9 to 1.2 |
| TEGO® Wet 500 | 0.25 to 1.0 |
| BINDZIL® cc 30 | 1.0 to 5.0 |
| HYDROCER EE95 | 5.0 to 15.0 |
| TEGO® Rad 2200 N | 0.1 to 1.0 |
| EBECRYL® 350 | 1.0 to 5.0 |
| Palladium chloride | 0.0025 to 0.025 |
| Tartaric acid | 0.011 to 0.110 |
| Potassium hydroxide | 0.01 to 0.1 |
| BACTIBLOCK® | 0.5 to 2.0 |
| H STAR PROTEIN® B liquid | 0.25 to 0.75 |
| Water | 0.1 to 20 |

Table 6 lists specific formulations that were tested and the experimental results. Each of the values listed in Table 6, with the exception of the bottom row, is given as parts, by weight, of the respective component in each formulation. The bottom row is given as a percentage of n-butanol absorbed in 1 hour.

**Table 6: Experimental Formulations**

| **Formulations** | **6.1** | **6.2** | **6.3** | **6.4** | **6.5** | **6.6** | **6.7** | **6.8** |
|---|---|---|---|---|---|---|---|---|
| UCECOAT® 7699 | 13.74 | 13.74 | 13.28 | 13.28 | 13.74 | 13.74 | 13.74 | 13.74 |
| ADDITOL® BCPK | 0.2 | 0.2 | 0.2 | 0.2 | 0.2 | 0.2 | 0.2 | 0.2 |
| TEGO® Wet 500 | 0.14 | 0.14 | 0.14 | 0.14 | 0.14 | 0.14 | 0.14 | 0.14 |
| H STAR PROTEIN® B liquid | 1.72 | 1.72 | 1.66 | 1.66 | - | 1.72 | 3.44 | 0 |
| BINDZIL® cc 30 | 0.56 | 0.56 | 0.54 | 0.54 | 0.56 | 0.56 | 0.56 | 0.56 |
| HYDROCER EE95 | 2.06 | 2.06 | 2 | 2 | 2.06 | 2.06 | 2.06 | 2.06 |
| TEGO® Rad 2200 N | 0.14 | 0.14 | 0.14 | 0.14 | 0.14 | 0.14 | 0.14 | 0.14 |
| EBECRYL® 350 | 0.42 | 0.42 | 0.4 | 0.4 | 0.42 | 0.42 | 0.42 | 0.42 |
| CAVASOL® W7 M solution | 0.82 | 0.82 | 0.8 | 0.8 | 0.82 | - | - | - |
| Aquamate 9026 | - | - | 0.66 | 0.66 | - | - | - | - |
| PROXEL® BZ Plus | - | - | - | - | - | - | - | - |
| BACTIBLOCK® G101 R1.47/AQ | 0.33 | 0.082 | 0.33 | 0.082 | 0.33 | 0.33 | 0.33 | 1.33 |
| Palladium complex | | | | | 0.001 | | | 0.001 |
| | | | | | | | | |
| n-Butanol (Abs/1h00) | 35% | 36% | 30% | 35% | 74% | 36% | 34% | 56% |

**Example 4**

The components listed in Table 7 were applied to different polymer films (e.g., PVC, PET, PP, and PE films). An odor and VOC-absorbing coating liquid was prepared as described above. The odor and VOC-absorbing coating liquid was roller coated onto the polymer films, dried at between 40 and 70°C for between 30 seconds and 2 minutes, and crosslinked using UV radiation. The dried coating had a density between about 2 and about 15 g/m², preferably between about 4 and about 10 g/m², typically about 5 g/m². The absorption capacities for odors and/or VOC were measured using a PID. The sample films absorbed between about 56 and about 100% of the odors and/or VOC in less than 1 hour. The coated film had an elongation at break between about 90 and about 250%, typically between about 110 and about 190%. The coated film had easy to clean (E2C) properties. For example, the sliding angle of a 25 µL DI water drop on the coated film was less than 30 degrees. The coated film also was resistant to red wine, cola, ketchup, and edible oils as measured in accordance with ISO Standard 2812-4: "Paints and varnishes-Determination of resistance to liquids-Part 4, Spotting methods." The coated film also demonstrated no wear after 5,000 "go and returns" as measured in accordance with ASTM-D 2486: "Test Method for Scrub Resistance of Wall Paint."

**Table 7: Experimental Formulation**

| **Formula** | **7.0** |
|---|---|
| **Component** | **Parts** |
| UCECOAT® 7699 | 100 |
| ADDITOL® BCPK | 1.5 |
| TEGO® Wet 500 | 1 |
| H STAR PROTEIN® B liquid | 10 |
| BINDZIL® cc 30 | 4 |
| HYDROCER EE95 | 15 |
| TEGO® Rad 2200 N | 1 |
| CAVASOL® W7 M solution | 4 |
| EBECRYL® 350 | 3 |
| **Total** | **139.5** |
| | |
| Palladium complex | 0.7 |
| BACTIBLOCK® | 9 |
| **Total** | **149.2** |

Table 8 shows the absorption data for various types of odors and/or VOC using the formulation of Example 4. To obtain the results shown in Table 8, an odor and VOC-absorbing topcoat having a thickness of about 8 µm was applied to a PVC film as described herein.

**Table 8: Experimental Results**

| **Odors/VOC** | **OLF and VOC active** | | **Sample in example 4, 8 µm on PVC** | |
|---|---|---|---|---|
| | **% absorbed** | **Time** | **% absorbed** | **Time** |
| n-butanol | 80% | 24h00 | 100% | 45 min |
| Formaldehyde | 80% | 32h00 | 100% | 58 min |
| Cigarettes | 86% | 24h00 | 100% | 37 min |
| Diesel motor exhaust | 100% | 18h00 | 100% | 42 min |

**Example 5**

Table 9 lists specific formulations that were prepared and tested. Each of the values listed in Table 9 is given as a weight percent of the respective component in each formulation. The n-butanol absorption of each formulation was determined as described above. Each of the formulations listed in Table 9 absorbed between 80 and 95% of the n-butanol in 1 hour.

**Table 9: Experimental Formulations**

| **Formula** | **9.1** | **9.2** |
|---|---|---|
| **Component** | **%** | **%** |
| UCECOAT® 7699 | 69.0 | 69.0 |
| ADDITOL® BCPK | 1.0 | 1.0 |
| TEGO® Wet 500 | 1.0 | 1.0 |
| H STAR PROTEIN® B liquid | 5.0 | 5.0 |
| BINDZIL® cc 30 | 2.0 | 2.0 |
| HYDROCER EE95 | 10.0 | 10.0 |
| TEGO® Rad 2200 N | 0.5 | 0.5 |
| CAVASOL® W7 M solution | 4.0 | 4.0 |
| EBECRYL® 350 | 2.0 | 2.0 |
| Aquamate 9026 | 5.0 | 0.0 |
| Palladium complex | 0.5 | 0.5 |
| BACTIBLOCK® G101 S1.19/AQ | 0.0 | 0.0 |
| SPHERIGLASS® | 0.0 | 5.0 |
| **Total** | **100** | **100** |

**Example 6**

Table 10 lists specific formulations that were prepared and tested. Each of the values listed in Table 10 is given as a weight percent of the respective component in each formulation. The n-butanol absorption of each formulation was determined as described above. Each of the formulations listed in Table 10 absorbed 100% of the n-butanol in 1 hour.

**Table 10: Experimental Formulations**

| **Formula** | | |
|---|---|---|
| | **10.1** | **10.2** |
| **Component** | | |
| RD-MONOGRAFF® | 89.25 | 79.25 |
| BACTIBLOCK® | 0.75 | 0.75 |
| H STAR PROTEIN® B liquid | 5 | 15 |
| Palladium complex | 5 | 5 |
| **Total** | **100** | **100** |

The above examples are illustrative only, and should not be interpreted as limiting since further modifications of the disclosed embodiments will be apparent to those skilled in the art in view of this disclosure. All such modifications are deemed to be within the scope of the embodiments disclosed herein. Moreover, the advantages described herein are not necessarily the only advantages, and it is not necessarily expected that every embodiment will achieve all of the advantages described.

## Claims

1. A multilayer film comprising:
a polymeric film layer; and
an absorbing layer on a side of the polymeric film layer, the absorbing layer comprising a palladium complex and at least one of a cyclodextrin, a hydrophobin protein, and a derivative thereof, in amounts effective to absorb an odor, a volatile organic compound, or both.

2. The multilayer film of claim 1,
further comprising an adhesive layer on a second side of the polymeric film layer opposite the first side, especially wherein the adhesive layer comprises a pressure sensitive adhesive, and/or especially wherein the adhesive layer comprises at least one of a cyclodextrin, a hydrophobin protein, and a derivative thereof; and/or
wherein the absorbing layer further comprises an antibacterial agent; and/or
wherein the absorbing layer further comprises a binder, especially wherein the binder comprises at least one of a cement, an alkyd, an acrylic, a vinyl-acrylic, a vinyl acetate/ethylene, a polyurethane, a polyester, a melamine resin, an epoxy, and an oil.

3. The multilayer film of claim 1,
wherein the palladium complex comprises a palladium carboxylate, especially wherein the palladium carboxylate is selected from the group consisting of palladium tartrate, palladium succinate, palladium mesoxalate, palladium gluconate, and a combination thereof; and/or
wherein the absorbing layer comprises between about 0.1 and about 0.75 percent by weight of the palladium complex; and/or
wherein the absorbing layer comprises between about 2 and about 7 percent by weight of the cyclodextrin; and/or
wherein the absorbing layer comprises between about 0.1 and about 0.5 percent by weight of the hydrophobin protein; and/or
wherein the absorbing layer comprises between about 0.1 and about 0.75 percent by weight of the palladium complex, between about 2 and about 7 percent by weight of the cyclodextrin, and between about 0.1 and about 0.5 percent by weight of the hydrophobin protein; and/or
wherein the absorbing layer comprises the cyclodextrin, and the cyclodextrin comprises a methyl-beta cyclodextrin; and/or
wherein the polymeric film layer comprises at least one of polyethylene, polypropylene, polyvinyl chloride, and polyethylene terephthalate; and/or
wherein the multilayer film has a sufficient absorbing capability such that a section of the multilayer film having an absorbing layer with a surface area of between 280 and 320 cm² and placed in a chamber having a volume of 400 cm³ with 2 cc of an n-butanol saturated atmosphere injected into the chamber absorbs greater than about 80 percent of the n-butanol in 1 hour.

4. A process for making a multilayer film comprising a polymeric film layer, an adhesive layer, and an absorbing layer capable of absorbing an odor, a volatile organic compound, or both, the process comprising:
providing the polymeric film layer;
applying to a first surface of the polymeric film layer an adhesive;
applying to a second surface of the polymeric film layer an absorbing topcoat solution comprising a palladium complex and at least one of a cyclodextrin and a hydrophobin protein; and
drying the absorbing topcoat solution to form the absorbing layer comprising the palladium complex and the at least one of a cyclodextrin and a hydrophobin protein in amounts effective to absorb an odor, a volatile organic compound, or both.

5. The process of claim 4,
further comprising UV curing the absorbing topcoat solution to form the absorbing layer; and/or
wherein the palladium complex is formed by combining a palladium salt with a complexing agent, especially wherein the palladium salt is selected from the group consisting of palladium chloride, palladium sulfate, palladium nitrate, and a combination thereof, and/or especially wherein the complexing agent comprises a carboxylic acid selected from the group consisting of tartaric acid, succinic acid, mesoxalic acid, gluconic acid, and a combination thereof.

6. An absorbing topcoat adapted to be disposed on a substrate, the absorbing topcoat capable of absorbing an odor, a volatile organic compound, or both and comprising:
a palladium complex; and
at least one of a cyclodextrin, a hydrophobin protein, and a derivative thereof in amounts effective to absorb an odor, a volatile organic compound, or both.

7. The absorbing topcoat of claim 6,
further comprising an antibacterial agent; and/or
further comprising a binder, especially wherein the binder comprises at least one of a cement, an alkyd, an acrylic, a vinyl-acrylic, a vinyl acetate/ethylene, a polyurethane, a polyester, a melamine resin, an epoxy, and an oil; and/or
wherein the palladium complex comprises a palladium carboxylate, especially wherein the palladium carboxylate is selected from the group consisting of palladium tartrate, palladium succinate, palladium mesoxalate, palladium gluconate, and a combination thereof; and/or
wherein the absorbing topcoat comprises between about 0.1 and about 0.75 percent by weight of the palladium complex; and/or
wherein the absorbing topcoat comprises between about 2 and about 7 percent by weight of the cyclodextrin; and/or
wherein the absorbing topcoat comprises between about 0.1 and about 0.5 percent by weight of the hydrophobin protein.

8. A process for making an absorbing topcoat adapted to absorb an odor, a volatile organic compound, or both, the process comprising:
combining a palladium salt and at least one of a carboxylic acid and a chloride to form a palladium complex solution;
combining (a) at least one of a cyclodextrin, a hydrophobin protein, and a derivative thereof, (b) the palladium complex solution, and (c) a coating liquid to form an absorbing topcoat solution; and
applying the absorbing topcoat solution to a substrate.

9. The process of claim 8, wherein the palladium salt is selected from the group consisting of palladium chloride, palladium sulfate, palladium nitrate, and a combination thereof; and/or
wherein the carboxylic acid is selected from the group consisting of tartaric acid, succinic acid, mesoxalic acid, gluconic acid, and a combination thereof; and/or
further comprising combining the palladium complex solution with an alkaline compound, especially wherein the alkaline compound is selected from the group consisting of potassium hydroxide, sodium hydroxide, and a combination thereof; and/or
wherein the coating liquid comprises a polymer dispersion; and/or
wherein the coating liquid comprises at least one of a paint and a varnish.

10. An absorbing solution adapted to absorb an odor, a volatile organic compound, or both, the absorbing solution comprising, in combination:
a palladium salt;
a complexing agent comprising at least one of a carboxylic acid and a chloride; and
at least one of a cyclodextrin, a hydrophobin protein, and a derivative thereof.

11. The absorbing solution of claim 10,
wherein the palladium salt is selected from the group consisting of palladium chloride, palladium sulfate, palladium nitrate, and a combination thereof; and/or
wherein the complexing agent comprises the carboxylic acid, and the carboxylic acid is selected from the group consisting of tartaric acid, succinic acid, mesoxalic acid, gluconic acid, and a combination thereof; and/or
wherein the absorbing solution comprises between about 0.001 and about 0.045 percent by weight of the palladium salt; and/or
wherein the absorbing solution comprises between about 0.01 and about 0.5 percent by weight of the carboxylic acid.

12. An absorbing product configured to absorb an odor, a volatile organic compound, or both, the absorbing product comprising:
a substrate comprising a surface; and
an absorbing topcoat disposed on the surface of the substrate, the absorbing topcoat comprising a palladium complex and at least one of a cyclodextrin, a hydrophobin protein, and a derivative thereof in amounts effective to absorb an odor, a volatile organic compound, or both.

13. The absorbing product of claim 12,
wherein the substrate comprises a polymeric film layer; and/or
wherein the absorbing topcoat further comprises an antibacterial agent;
and/or
wherein the absorbing topcoat further comprises a binder, especially wherein the binder comprises at least one of a cement, an alkyd, an acrylic, a vinyl-acrylic, a vinyl acetate/ethylene, a polyurethane, a polyester, a melamine resin, an epoxy, and an oil.

14. The absorbing product of claim 12,
wherein the palladium complex comprises a palladium carboxylate, especially wherein the palladium carboxylate is selected from the group consisting of palladium tartrate, palladium succinate, palladium mesoxalate, palladium gluconate, and a combination thereof; and/or
wherein the absorbing topcoat comprises between about 0.1 and about 0.75 percent by weight of the palladium complex; and/or
wherein the absorbing topcoat comprises between about 2 and about 7 percent by weight of the cyclodextrin; and/or
wherein the absorbing topcoat comprises between about 0.1 and about 0.5 percent by weight of the hydrophobin protein; and/or
wherein the absorbing product has a sufficient absorbing capability such that a section of the absorbing product having an absorbing topcoat with a surface area of between 280 and 320 cm² and placed in a chamber having a volume of 400 cm³ with 2 cc of an n-butanol saturated atmosphere injected into the chamber absorbs greater than about 80 percent of the n-butanol in 1 hour.

15. A method for purifying interior air, the method comprising:
applying to an interior surface of a habitable structure an absorbing topcoat adapted to absorb an odor, a volatile organic compound, or both, the absorbing topcoat comprising a palladium complex and at least one of a cyclodextrin, a hydrophobin protein, and a derivative thereof; and
allowing the absorbing topcoat to be maintained in contact with the interior air for a period of time to absorb at least a portion of the odor or the volatile organic compound present in the interior air;
wherein the absorbing topcoat purifies the interior air without energy consumption and without photocatalyzation.
